# EUROPEAN PATENT SPECIFICATION

(11) **EP 0 545 501 B1**
(45) Date of publication and mention of the grant of the patent: **12.04.1995**
(21) Application number: 92203729.6
(22) Date of filing: 02.12.1992
(51) Int. Cl.: A22B 5/00, A22B 7/00

(54) **Method and device for carrying out processing operations on carcasses of slaughtered animals**
Verfahren und Vorrichtung zum Verarbeiten von Schlachttierkörpern
Procédé et dispositif de traitement de carcasses d'animaux d'abattage

(30) Priority: 05.12.1991 NL 9102032
(43) Date of publication of application: 09.06.1993
(73) Proprietor: CCM BEHEER B.V., NL-5672 AD Nuenen (NL)
(72) Inventor: Jaspers, Martinus Jacobus, NL-5674 NT Nuenen (NL); Willemsen, Henricus Petrus, NL-5735 RD Aarle-Rixtel (NL)
(74) Representative: Timmers, Cornelis Herman Johannes

(56) References cited:
- EP-A- 0 180 454
- EP-A- 0 273 371
- NL-A- 9 001 591

## Description

The invention relates to a method such as that described in the preamble of Claim 1, and to a device for carrying out said method, as described in the preamble of Claim 5.

The carrying out of processing operations on carcasses or carcass halves, or the carrying out of monitoring operations thereon is the subject of EP-A-0,273,371. In the method and device known from this application the carcasses are conveyed moving continuously through the device; a second, intermittently operating conveyor system takes each carcass out of the first conveyor and moves it along the processing devices. This layout leads to a particularly complex and cumbersome unit with many moving parts.

The object of the invention is to provide a method of the type described above which is much simpler to carry out and a device of the type described above which is considerably simpler in design. This object is achieved by the method steps described in the characterising part of Claim 1, and in the sub-claims dependent thereon, and, respectively, in the characterising part of claim 5 and the sub-claims dependent thereon.

Although moving the device along with the conveyor while the processing operations are being carried out requires a drive which must be synchronised with the conveyor, and in a preferred embodiment it must ensure that the entire device is returned at accelerated speed to the initial position after the operations have been carried out, this constitutes no problem at all with the control and drive means currently available. The positioning proposed according to the application results in a very accurate positioning of the carcasses relative to the processing elements, so that the operations can be carried out at exactly the desired place.

Both complete and cleaved carcasses, thus in fact carcasses consisting of two halves, can be processed by the method and with the device according to the invention. In the description which follows the latter situation is assumed.

The invention is explained with reference to the drawing, in which:
Figure 1 is a perspective schematic illustration of a complete installation for carrying out the method according to the invention;
Figure 2 is a side view of the principal parts thereof;
Figure 3 is a front view of this installation;
Figure 4a shows how an already cleaved carcass, thus consisting of two carcass halves, arrives at the installation;
Figure 4b shows the two carcass halves turned through 90° relative to the position shown in Figure 4a;
Figure 4c shows in side view the positioning of the carcass halves;
Figure 5 shows this positioning in front view;
Figure 6 shows a side view of the elements for bringing the gambrel from which the carcass hangs into the correct position;
Figure 7 shows these elements in front view.

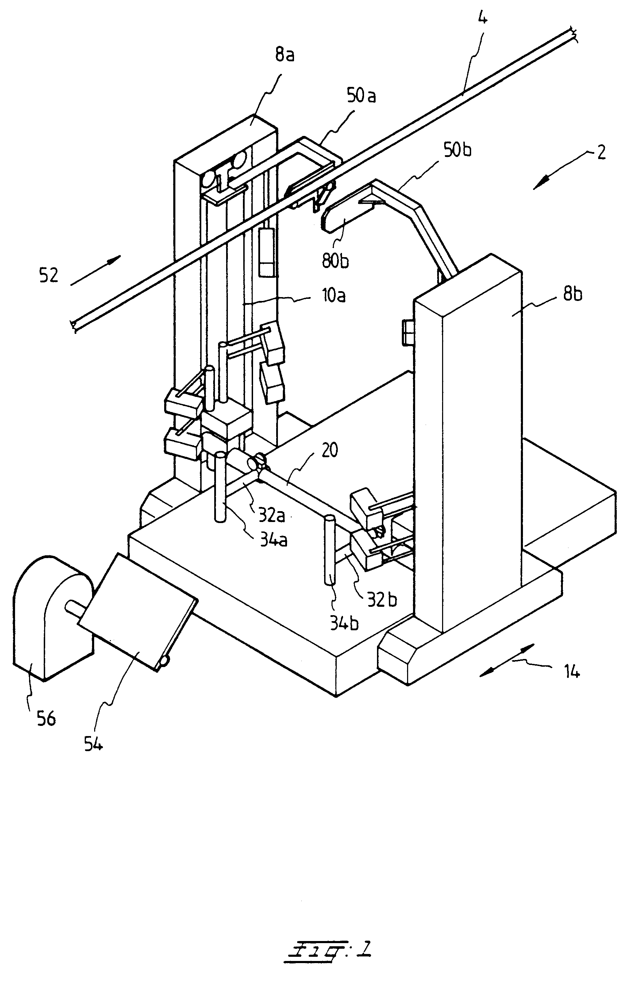

The device according to the invention, intended for carrying out the method described above, is shown in Figure 1 and comprises a processing device shown in its entirety by reference number 2. Said device is disposed along a conveyor 4 on which carcasses or carcass halves of slaughtered animals - in the present case pig carcass halves - are conveyed hanging from gambrels 6.

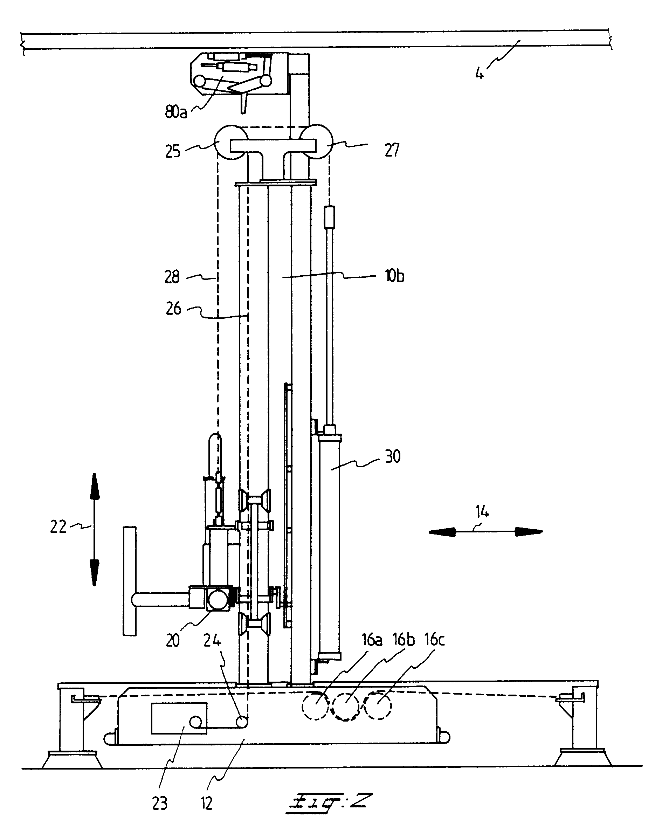

The processing device comprises columns 10a, 10b accommodated in casings 8a, 8b and supported by a carriage 12. The carriage 12 can be driven in a to and fro movement in the direction of the arrows 14 (Figure 2) by means of a drive motor (not shown) interacting with pinions 16a, 16b, 16c and a fixed toothed belt 18. The whole unit is under the influence of a suitable control system, the implementation of which will give the person skilled in the art no problems, and which will therefore not be discussed further here.

The columns 10a, 10b bear a horizontal stop bar 20 which can be set in the direction of the arrows 22 at a desired height by means of a hoist motor 23 which drives a hoisting cable 26 passed over guide rollers 24, 25. The weight of the horizontal stop bar 20 with the components supported by it is in this case largely compensated for by the air spring 30 which is connected to the bar 20 by means of the cable 28 passed over the rollers 27, 25.

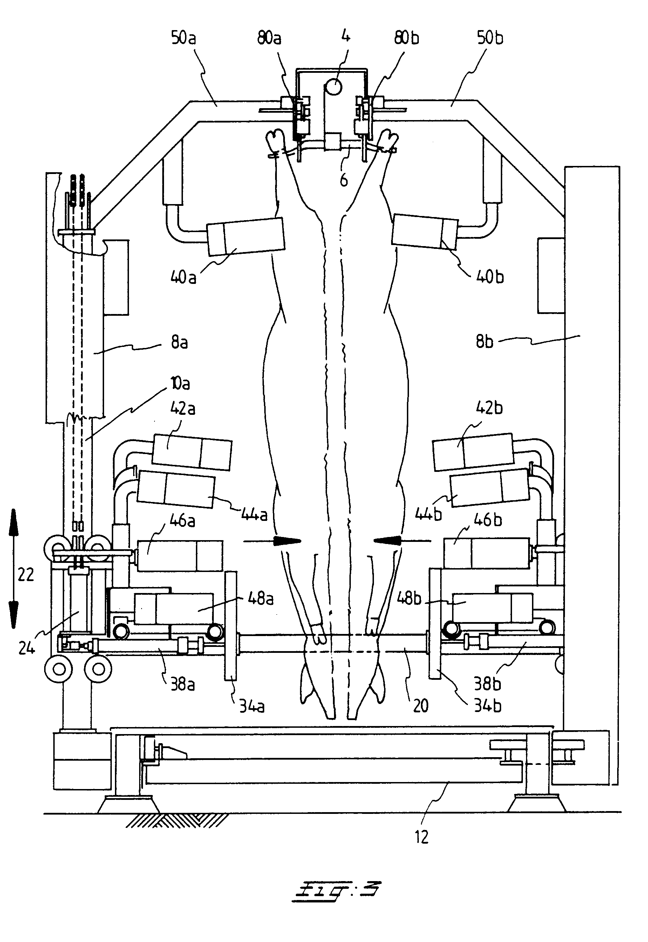

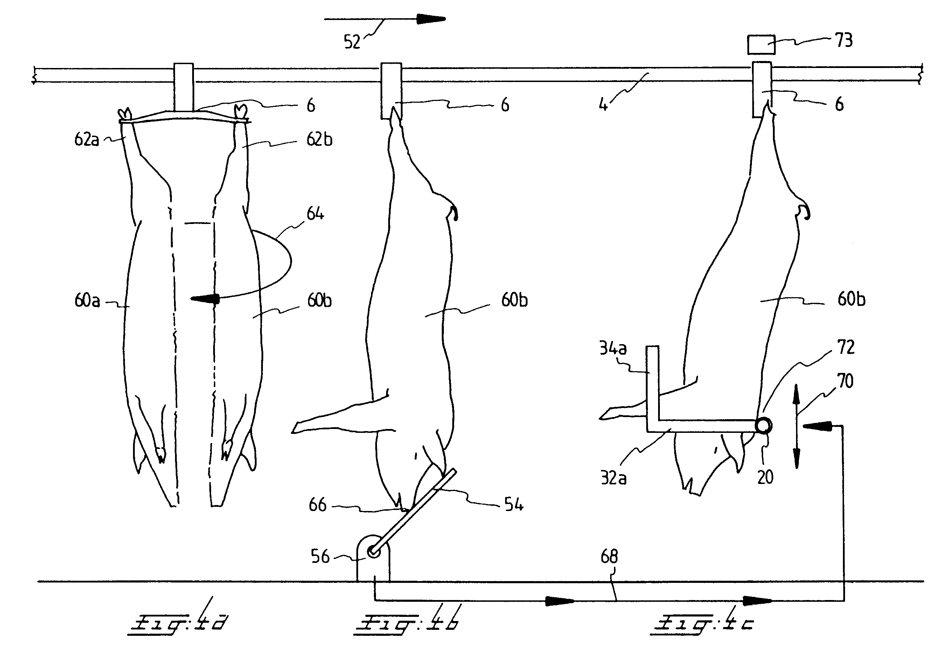

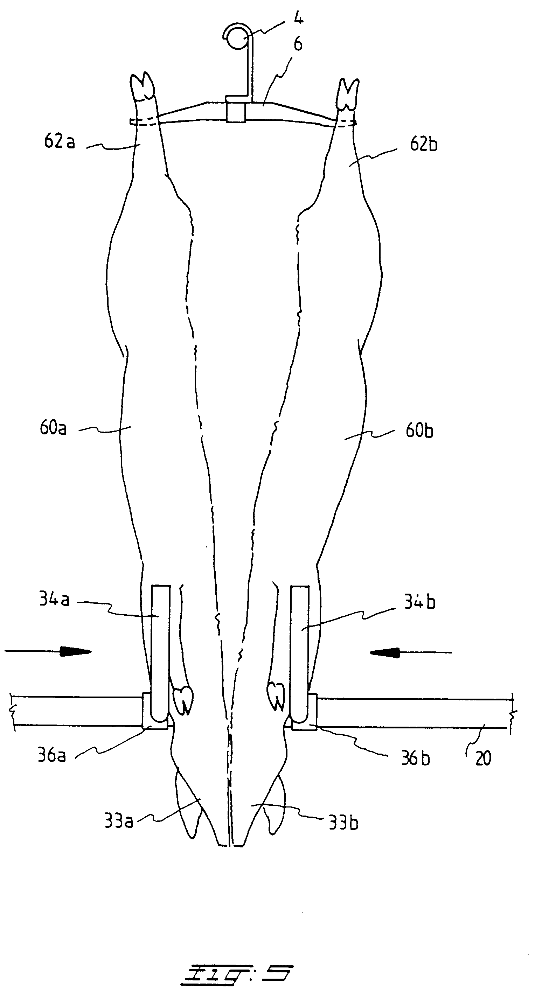

The transverse bar 20 supports two horizontal stops 32a, 32b which can be moved to and fro in the direction of the arrows (Figures 3, 5), and which each bear at their end a vertical leg presser 34a, 34b; these stops 32a, 32b are fixed to suitable guides 36a, 36b which interact with working cylinders 38a, 38b.

The device according to the invention is suitable for positioning carcasses for carrying out operations on them in the widest sense of the word; the device now to be described is specially designed for stamping carcasses. For this, the device comprises a number of schematically shown stamp holders 40a, 40b; 42a, 42b; 44a, 44b; 46a, 46b and 48a, 48b, of which the stamp holders 40a, 40b are supported at a fixed height by the arms 50a, 50b going out from the columns 8a, 8b, while the stamp holders 42a ... 48a and 42b ...48b are supported by the transverse bar 20, by means of which their height can be adjusted. The stamp holders are supported by control arms, by means of which they can be moved to the carcass halves and away from them; the design of these control arms will not be discussed in detail here.

As seen in the direction of movement of the carcasses, indicated by the arrow 52, there is before the device a measuring plate 54, known per se, which is intended for measuring the carcass length and is pivotably supported by a housing 56. It contains a sensor (not shown) which delivers a signal which is a measure of the angle through which, when the carcass is passing the plate, the plate is turned by the head thereof, and which is thus also a direct measure of the carcass length. Of course, any other suitable means, for example optical or ultrasonic, can be used for determining the carcass length.

The method according to the invention implemented with the device according to the invention is executed as follows:
Two carcass halves, such as the carcass halves 60a, 60b are conveyed hanging from the gambrel 6 along the conveyor 52 in the position shown in Figure 4a, thus in the usual way with the hind legs 62a, 62b hanging from the gambrel 6, and the latter directed in the lengthwise direction of the conveyor 4. By means of a suitable device, known per se and not shown, the gambrel 6 is turned through 90° in the direction of the arrow 64, and the whole unit then assumes the position shown in Figure 4b. The snout 66 runs against the measuring plate 54 and turns the latter through a certain angle corresponding to the length of the carcass halves 60a, 60b; the measurement signal thereupon given by the device is fed to the device 2 (as symbolised by the connecting line 68) and brings about there the setting, at the desired height, of the horizontal stop bar 20 with all the elements connected thereto, as symbolised by the double arrow 70 in Figure 4c.

This setting of the horizontal stop 20 is such that the carcass runs with the neck zone 72 against the bar 20 and the moment at which the carcass has reached this position is observed by the position of the gambrel 6 being detected by a suitable, schematically shown sensor 73. This sensor emits a signal which results into the working cylinders 48a, 48b being set in operation, and thereby the movement towards each other, in the direction of the arrows 30, of the horizontal stops 32a, 32b and the vertical leg pressers 34a, 34b supported by them. The former, 32a, 32b, clamp the carcass halves 60a, 60b, between head and shoulders, against each other as shown in Figure 5, and the latter, 34a, 34b, press the legs 74a, 74b towards each other. The position shown in Figure 5 is thus reached.

As already stated, the whole processing device 2 can be driven in the direction of the arrows 14, and shortly after the carcass has run against the horizontal stop 20 and the stops 32a, 32b with the leg pressers 34a, 34b have reached their end position - while the movement of the gambrel 6 has continued without interruption, so that the carcass halves 60a, 60b are stretched - the carriage 12 is driven in a movement which follows the direction of movement of the conveyor. Due to the fact that the horizontal stops 32a, 32b grip above the jawbone, the carcass does not slide away between the stops. The carriage can carry out a certain stroke, and this takes place within a time which is sufficient to carry out the operations on the carcass, in this case the stamping.

At the end of the stroke of the carriage 12, the stops 32a, 32b with the leg pressers 34a, 34b are moved away from each other, so that the carcass halves are in fact released; they are pulled with the head halves 33a, 33b over the stop 20 (which to that end is moved down over a distance corresponding to the head length), and the carcass follows its path.

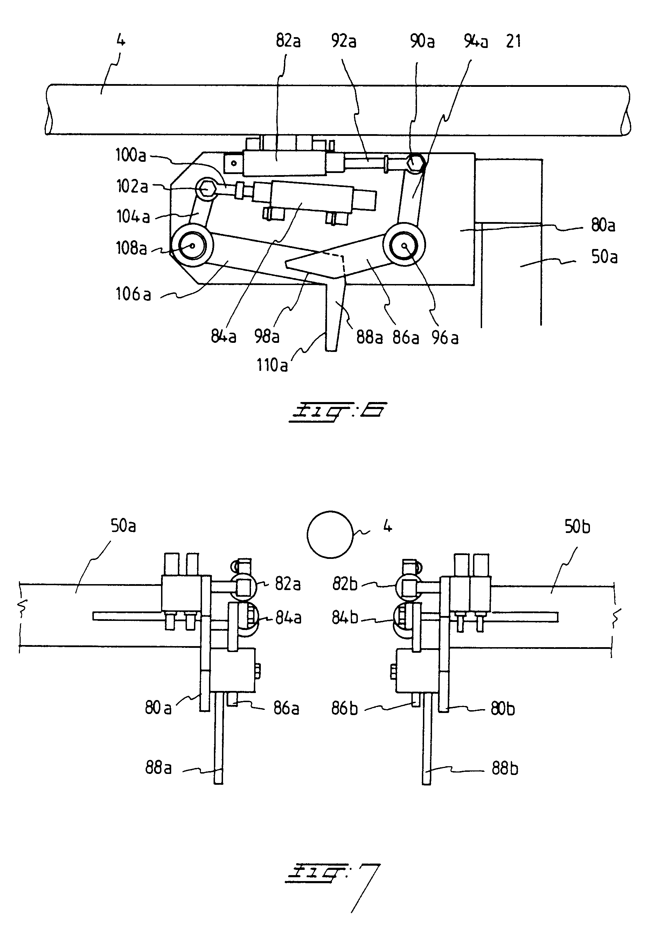

It can be desirable for certain applications, in particular for the stamping of the carcass parts described above, for the gambrel 6 to be positioned accurately relative to the device during the operations. This can be achieved by means of stops disposed on the arms 50a, 50b and acting on the two halves of the gambrel 6. These are shown in greater detail in Figures 6 and 7, Figure 6 showing a side view of one set of stops, and Figure 7 a front view of both sets of stops.

As the figures show, each of the arms 50a, 50b bears a support plate 80a, 80b respectively, and each support plate 80a, 80b bears two working cylinders 82a, 84a and 82b, 84b respectively. The working cylinders 82a, 82b each operate the straight stop 86a, 86b respectively, and the working cylinders 84a, 84b each operate the hook-shaped stop 88a, 88b. The straight stops 86a, 86b press from the top on the two respective halves of the gambrel 6, and thus hold the gambrel horizontal; the stops 88a, 88b can be taken into the path of the gambrel 6 and when a gambrel 6 runs against them they ensure that the gambrel 6 remains precisely crosswise to the conveyor 4.

For the sake of simplicity, only the operation of the stops 86a, 88a will be described; the way in which the stops 86b, 88b are operated is similar.

The piston rod 92a of the cylinder 82a is connected by means of the pivot point 90a to the pivoting arm 94a, which is firmly connected to the stop 86a and can turn with the latter about the pivot point 96a. The flat underside 98a of the stop 96a acts on the top side of a gambrel half.

The piston rod 100a of the cylinder 84a is connected by means of the pivot point 102a to the pivoting rod 104a which is firmly connected to the body part 106a of the stop 88a and can turn with the latter about the fixed pivot point 108a; the stop face 110a of the stop 88a acts on the front face of the gambrel 6. In this way it is ensured that the gambrel 6 lies precisely crosswise to the conveyor 4.

With the device according to the invention an exact positioning of the two carcass halves relative to the elements carrying out the operations thereon, in particular stamping devices, is obtained, while in particular as a result of the fact that the device moves along with the carcass halves while the operations are being carried out, the operations are carried out in exactly the right place.

## Claims

1. Method for carrying out processing operations on moving carcasses (60a, 60b) of slaughtered animals which are positioned with respect to a processing device (2), in which the carcass (60a, 60b) is hanging by the hind legs (62a, 62b) from a carrier (4, 6) in such a way that the respective insides of the halves lie opposite each other,
**characterised in that**
the processing device (2) can move in a controlled manner along with the carcass halves in the direction (52) of forward movement;
each carcass on reaching this device (2) runs with the neck zone against a first stop (20) on said device;
second stops (32a, 32b) on said device, which can be moved transversely to the direction (52) of forward movement, grip on either side of the carcass and clamp it;
the carcass is stretched, by starting the movement of the processing device in the direction of travel of the carcass shortly after the second stops have clamped the carcass, and the device (2) is moved along with the carcass over a certain distance and the processing operations are carried out.

2. Method according to Claim 1, **characterised in that** the second stops (32a, 32b) grip directly under the shoulder in the neck zone (72).

3. Method according to Claims 1 - 2, **characterised in that** after the operations are carried out the processing device (2) is returned to the initial position in a movement in the opposite direction to the direction of forward movement.

4. Method according to Claims 1 - 3, **characterised in that** the operations consist of stamping carcass parts.

5. Device for carrying out the method according to Claims 1 - 4, with processing elements (42a ... 46a; 42b .... 46b) disposed near a conveyor (4, 6) for slaughtered animal carcasses (60a, 60b), **characterised in that** these processing elements are supported by a processing device (2) which is to be driven over a particular distance under the influence of control means in the direction of movement of the conveyor (4, 6), and which bears a first stop (20) lying in the path covered by the carcasses, against which stop (20) the carcasses can run in the region of the neck zone (72), and is also provided with two second stops (32a, 32b) which are disposed on either side of the conveyor and can be driven transversely to the direction (52) of the conveyor, (4, 6) and which are intended for gripping on either side of the carcasses, the control means being designed for detecting the coming to rest of the carcass halves to lie against the first stop, in response thereto activating the second stops (32a, 32b) starting the movement of the device (2) along with the conveyor shortly after the second stops have gripped the carcass, thereby stretching of the carcass over a predetermined distance, and making the device (2) move along with the conveyor while the processing operations are carried out.

6. Device according to Claim 5, **characterised by** means for returning the processing device at accelerated speed to the initial position after the operations have been carried out.

7. Device according to Claims 5 - 6, **characterised in that** each second stop (32a, 32b) bears an upright leg presser (34a, 34b).

8. Device according to Claims 5 - 7, and intended for interaction with a conveyor 4 provided with gambrels (6), **characterised by** two gambrel stops (88a, 88b) disposed on either side of said conveyor and movable in a controlled manner in a vertical plane under the influence of control means (84a, 84b), which stops can be moved into and out of the path of a gambrel.

9. Device according to Claim 8, **characterised by** two pressure elements (86a, 86b) which are disposed next to each gambrel stop (88a, 88b) and are movable in a controlled manner in a vertical plane under the influence of the control means (82a, 82b), and which each act upon a gambrel (6)

10. Device according to Claims 5 - 9, **characterised by** means for detecting the position of the carcass carriers, for deriving therefrom a signal representing the running of a carcass against the stop bar.

## Patentansprüche

1. Verfahren zur Ausführung einer Verarbeitungshandlung an bewegten Körpern (60a, 60b) von geschlachteten Tieren, welche in bezug zu einer Verarbeitungsvorrichtung (2) positioniert sind, in der der Körper (60a, 60b) an dessen hinteren Schenkeln (62a, 62b) von einem Träger (4, 6) in einer solchen Art und Weise herunterhängen, daß die Innenseiten der Hälften einander gegenüberliegen, dadurch gekennzeichnet, daß die Verarbeitungsvorrichtung (2) in einer kontrollierten Weise mit den Körperhälften in Richtung (52) der Vorwärtsbewegung bewegbar ist;
daß jeder Körper beim Erreichen dieser Vorrichtung (2) mit seiner Nackenzone gegen einen ersten Stopper (20) an dieser Vorrichtung läuft;
daß zweite Stopper (32a, 32b) an dieser Vorrichtung, welche transversal zu der Vorwärtsrichtung der Bewegung bewegbar sind, an jeder Seite des Körpers greifen und diesen klemmen;
daß der Körper gestreckt wird, indem die Verarbeitungsvorrichtung in der Richtung der Fortbewegung des Körpers, kurz nachdem die zweiten Stopper den Körper geklemmt haben, in Bewegung gesetzt wird;
und die Vorrichtung (2) über eine bestimmte Strecke zusammen mit dem Körper bewegt und die Verarbeitungshandlungen ausgeführt werden.

2. Verfahren nach Anspruch 1, dadurch gekennzeichnet, daß die zweiten Stopper (32a, 32b) direkt unterhalb der Schulter in der Nackenzone (72) greifen.

3. Verfahren nach einem der Ansprüche 1-2, dadurch gekennzeichnet, daß nachdem die Handlung ausgeführt ist, die Verarbeitungsvorrichtung (2) in die Anfangsposition in eine Richtung, die entgegengesetzt zu der Vorwärtsbewegung ist, bewegt wird.

4. Verfahren nach einem der Ansprüche 1-3, dadurch gekennzeichnet, daß die Handlung aus einer Stempelung der Körperteile besteht.

5. Vorrichtung zur Durchführung des Verfahrens nach einem der Ansprüche 1-4, mit Verarbeitungselementen (42a... 46a; 42b ... 46b) die in der Nähe der Transporteinrichtung (4, 6) für geschlachtete Tierkörper (60a, 60b) angeordnet sind, dadurch gekennzeichnet, daß diese Verarbeitungselemente von einer Verarbeitungsvorrichtung (2) gehaltert sind, welche über eine bestimmte Strecke unter Beeinflußung durch eine Regeleinrichtung in der Bewegungsrichtung der Transporteinrichtung (4, 6) verfahrbar ist, und welche einen ersten innerhalb eines von dem Körper beschriebenen Weges liegenden Stopper (20) trägt, und der Körper im Bereich der Nackenzone gegen den Stopper (20) laufen kann,
daß auch zweite Stopper (32a, 32b) vorgesehen sind, die an jeder Seite der Fördereinrichtung angeordnet sind und die transversal zu der Richtung (52) der Transporteinrichtung (4, 6) verfahrbar sind, und die zum Greifen des Körpers an jeder Seite vorgesehen sind, daß die Regeleinrichtung so gestaltet ist, daß sie detektiert, wann die Körperhälften an dem ersten Stopper anliegend zur Ruhe kommen, und in Reaktion darauf die zweiten Stopper (32a, 32b) aktiviert, und
daß die Vorrichtung entlang der Fördereinrichtung kurze Zeit, nachdem die zweiten Stopper den Körper gegriffen haben in Bewegung gesetzt wird, wobei der Körper innerhalb einer vorbestimmten Strecke gestreckt wird und die Vorrichtung (2) sich entlang und mit der Transporteinrichtung bewegt, während die Verarbeitungshandlungen ausgeführt werden.

6. Vorrichtung nach Anspruch 5, gekennzeichnet durch eine Einrichtung zur Rückführung der Verarbeitungseinrichtung mit beschleunigter Geschwindigkeit zu der Anfangsposition, nachdem die Handlung ausgeführt worden ist.

7. Vorrichtung nach einem der Ansprüche 5-6, dadurch gekennzeichnet, daß jeder der zweiten Stopper (32a, 32b) einen senkrechten Schenkelpresser (34a, 34b) trägt.

8. Vorrichtung nach einem der Ansprüche 5-7 die zum Zusammenwirkung mit einer Fördereinrichtung (4) versehen mit einem Fleischhaken (6) vorgesehen ist, gekennzeichnet durch zwei an jeder Seite der Fördereinrichtung angeordnete und in einer kontrollierten Weise in einer vertikalen Ebene unter dem Einfluß einer Regeleinrichtung (84a, 84b) bewegliche Stopper (82a, 88b), die Stopper können in den Weg des Fleischhakens hinein und aus diesem bewegt werden.

9. Vorrichtung nach Anspruch 8 gekennzeichnet durch zwei Druckelemente (86a, 86b), welche in der Nähe eines jeden Fleischhakenstoppers (88a, 88b) angeordnet sind und in einer geregelten Art und Weise in einer vertikalen Ebene unter dem Einfluß der Regeleinrichtung (82a, 82b) bewegbar sind, und ein jedes auf einen Fleischhaken (6) einwirkt.

10. Vorrichtung nach einem der Ansprüche 5-9, gekennzeichnet durch eine Einrichtung zur Bestimmung der Position des Körperträgers, um daraus ein Signal abzuleiten, welches das Gegenlaufen des Körpers gegen den Halteriegel repräsentiert.

## Revendications

1. Procédé pour l'exécution d'opérations de traitement sur des carcasses (60a, 60b) mobiles d'animaux abattus, qui sont placés par rapport à un dispositif de traitement (2), dans lequel la carcasse (60a, 60b) est suspendue par les pattes arrière (62a, 62b) à un support (4, 6) de telle manière que les parties intérieures respectives des demi-carcasses soient placées face à face,
caractérisé en ce que
le dispositif de traitement (2) peut se déplacer d'une manière commandée en même temps que les demi-carcasses dans le sens (52) de l'avance ;
chaque carcasse, lorsqu'elle atteint ce dispositif (2), vient heurter par la zone du cou une première butée (20) sur ledit dispositif ;
des deuxièmes butées (32a, 32b) sur ledit dispositif, qui peuvent être déplacées transversalement au sens (52) de l'avance, viennent saisir et serrer la carcasse de part et d'autre ;
la carcasse est étirée, en lançant le mouvement du dispositif (2) de traitement dans le sens de déplacement de la carcasse peu de temps après que les deuxièmes butées ont serré la carcasse, et le dispositif est déplacé en même temps que la carcasse sur une certaine distance et les opérations de traitement sont exécutées.

2. Procédé selon la revendication 1, caractérisé en ce que les deuxièmes butées (32a, 32b) viennent en contact directement sous l'épaule dans la zone du cou (72).

3. Procédé selon la revendication 1 et 2, caractérisé en ce que, après que les opérations ont été exécutées, le dispositif de traitement (2) est ramené à la positon initiale dans un déplacement dans le sens opposé au sens de l'avance.

4. Procédé selon les revendications 1 à 3, caractérisé en ce que les opérations consistent en un estampillage de parties de la carcasse.

5. Dispositif pour la mise en oeuvre du procédé selon les revendications 1 à 4, avec des éléments de traitement (42a ... 46a ; 42b ... 46b) disposés à proximité d'un convoyeur (4, 6) pour des carcasses (60a, 60b) d'animaux abattus, caractérisé en ce que ces éléments de traitement sont soutenus par un dispositif de traitement (2) destiné à être entraîné sur une distance particulière sous l'influence de moyens de commande, dans le sens du déplacement du convoyeur (4, 6), et qui porte une première butée (20) placée dans le trajet couvert par les carcasses, les carcasses venant heurter par la zone du cou (72) cette butée (20), et qui est également pourvu de deux deuxièmes butées (32a, 32b) qui sont disposées de part et d'autre du convoyeur et qui peuvent être entraînées transversalement au sens de déplacement (52) du convoyeur (4, 6) et qui sont destinées à venir saisir les carcasses de part et d'autre, les moyens de commande étant conçus pour détecter l'arrêt des demi-carcasses lorsqu'elles arrivent contre la première butée, et pour mettre en conséquence en action les deuxièmes butées (32a, 32b), pour lancer le mouvement du dispositif (2) en même temps que le convoyeur peu après que les deuxièmes butées sont venues en contact avec la carcasse, pour ainsi étirer la carcasse sur une distance prédéterminée et pour faire déplacer le dispositif (2) en même temps que le convoyeur tandis que les opérations de traitement sont exécutées.

6. Dispositif selon la revendication 5, caractérisé par des moyens pour ramener le dispositif de traitement à une vitesse accélérée à la position initiale après que les opérations ont été exécutées.

7. Dispositif selon les revendications 5 et 6, caractérisé en ce que chaque deuxième butée (32a, 32b) porte un presse-patte verticale (34a, 34b).

8. Dispositif selon les revendications 5 à 7, et destiné à coopérer avec un convoyeur (4) pourvu de jambiers (6), caractérisé par deux butées de jambier (88a, 88b) disposées de part de d'autre dudit convoyeur et propres à être déplacées d'une manière commandée dans un plan vertical sous l'influence de moyens de commande (84a, 84b), lesquelles butées peuvent être amenées dans le trajet d'un jambier et sorties de ce trajet.

9. Dispositif selon la revendication 8, caractérisé par deux éléments presseurs (86a, 86b) qui sont disposés à côté de chaque butée de jambier (88a, 88b) et qui peuvent être déplacées d'une manière commandée dans un plan vertical sous l'influence des moyens de commande (82a, 82b) et qui agissent chacun sur un jambier (6).

10. Dispositif selon les revendications 5 à 9, caractérisé par des moyens pour détecter la position des supports de carcasses, et pour en obtenir un signal indiquant l'arrivée d'une carcasse contre la barre de butée.
